# EUROPEAN PATENT APPLICATION

(11) **EP 4 501 848 A1**
(43) Date of publication of application: **05.02.2025**
(21) Application number: 23779818.6
(22) Date of filing: 20.03.2023
(51) Int. Cl.: C01B 33/02, B82Y 30/00, B82Y 40/00, C01B 32/984

(54) **MICROPARTICLES AND METHOD FOR PRODUCING MICROPARTICLES**

(30) Priority: 31.03.2022 JP 2022059508
(71) Applicant: Nisshin Engineering Inc., Tokyo 103-8544 (JP)
(72) Inventor: WATANABE, Shu, Fujimino-city, Saitama 3568511 (JP); SUEYASU, Shiori, Fujimino-city, Saitama 3568511 (JP)
(74) Representative: Casalonga
(86) International application number: PCT/JP2023/010826
(87) International publication number: WO 2023/189802

(57) **Abstract**

Microparticles having excellent plasma resistance a method for producing the same are provided. The microparticles include SiC and Si and have a particle size of not more than 80 nm, a weight loss ratio of not more than 9 mass%, and a hydrophilicity degree of not more than 30%.

## Description

### TECHNICAL FIELD

The present invention relates to fine particles including SiC and Si, and a method for producing the same.

### BACKGROUND ART

At present, various types of fine particles are used in various applications. For instance, fine particles such as metal fine particles, silicon fine particles, oxide fine particles, nitride fine particles, and carbide fine particles have been used in electrical insulation materials for various electrical insulation parts, cutting tools, materials for machining tools, functional materials for sensors, sintered materials, electrode materials for fuel cells, and catalysts.

For example, Patent Literature 1 describes silicon/silicon carbide composite fine particles in which silicon fine particles are coated with silicon carbide. Patent Literature 1 describes dispersing silicon oxide powder in a carbon-containing liquid substance to obtain a slurry and converting the slurry into droplets to supply the droplets into an oxygen-free thermal plasma flame, thereby producing silicon/silicon carbide composite fine particles.

### CITATION LIST

### PATENT LITERATURE

PATENT LITERATURE 1: JP 5363397 B

### SUMMARY OF INVENTION

### TECHNICAL PROBLEMS

As described above, various types of fine particles are used in various applications and may be used in, for example, an environment exposed to plasma. For example, the above-described silicon/silicon carbide composite fine particles of Patent Literature 1 do not have sufficient plasma resistance.

An object of the present invention is to provide fine particles having excellent plasma resistance and a method for producing the fine particles.

### SOLUTION TO PROBLEMS

In order to attain the above-described object, one embodiment of the invention provides fine particles comprising SiC and Si, the fine particles having a particle size of not more than 80 nm, a weight loss ratio of not more than 9 mass%, and a degree of hydrophilization of not more than 30%.

There is provided a method for producing fine particles, comprising: a step of supplying Si powder as a feedstock into a thermal plasma flame; and a step of supplying cooling gas to the thermal plasma flame to thereby produce the fine particles, wherein the cooling gas includes methane gas.

The step of supplying the feedstock into the thermal plasma flame preferably includes supplying the feedstock into the thermal plasma flame with the feedstock being dispersed in a particulate form.

### ADVANTAGEOUS EFFECTS OF INVENTION

The fine particles according to the invention have excellent plasma resistance.

The method for producing fine particles according to the invention makes it possible to obtain fine particles having excellent plasma resistance.

### BRIEF DESCRIPTION OF DRAWINGS

[FIG. 1] FIG. 1 is a schematic view showing an example of a fine particle production apparatus that is used in a method for producing fine particles according to the invention.
[FIG. 2] FIG. 2 is a graph showing oxygen plasma resistance of fine particles of the invention.
[FIG. 3] FIG. 3 is a graph showing fluorine plasma resistance of the fine particles of the invention.

### DESCRIPTION OF EMBODIMENTS

Fine particles and a method for producing fine particles according to the invention are described below in detail based on a preferred embodiment shown in the accompanying drawings.

It should be noted that the drawings described below are illustrative to explain the invention, and the invention is not construed to be limited to the drawings described below.

Hereinafter, the fine particles are described. The fine particles of the invention have plasma resistance.

### [One Example of Fine Particles]

Fine particles include SiC and Si and have a particle size of not more than 80 nm, a weight loss ratio of not more than 9 mass%, and a degree of hydrophilization of not more than 30%.

"Including SiC and Si" means that single type particles such as a Si particle and a SiC particle may be mixed and individually present, or SiC and Si may be included in each particle. When SiC and Si are included in each particle, the fine particles are composite particles in which SiC and Si are combined in a single particle.

Whether the fine particles include SiC and Si can be examined using, for instance, X-ray crystallography (XRD).

The particle size of the fine particles is the average particle size measured using the BET method. When the particle size of the fine particles is not more than 80 nm, contamination of a product due to particles can be prevented. The particle size of the fine particles is preferably 10 to 60 nm.

The weight loss ratio can be obtained by thermogravimetry-differential thermal analysis (TG-DTA). In the thermogravimetry-differential thermal analysis, STA7200 (trade name) of Hitachi High-Technologies Corporation is used.

In the case where the weight loss ratio is not more than 9 mass%, weight loss due to the oxygen plasma can be suppressed when the fine particles are exposed to oxygen plasma among plasmas; thus the fine particles have oxygen plasma resistance. On the other hand, in the case where the weight loss ratio is more than 9 mass%, weight loss due to the oxygen plasma increases when the fine particles are exposed to oxygen plasma; thus oxygen plasma resistance cannot be obtained.

In the case where the weight loss ratio of the fine particles is not more than 9 mass%, disappearance of a rubber component due to reaction of the rubber component with plasma is suppressed when, for example, the fine particles are mixed with rubber and the rubber is irradiated with oxygen plasma. In the case where the weight loss ratio of the fine particles is more than 9 mass%, when rubber mixed with the fine particles is irradiated with oxygen plasma, the weight loss amount of the fine particles increases, and cases that a rubber component reacts with plasma and disappears increase.

The degree of hydrophilization is a value obtained by dividing an adsorption area of moisture adsorbed on particle surfaces by an absorption area of nitrogen molecules adsorbed on the particle surfaces and can be determined by a high-accuracy gas/moisture adsorption amount measuring device. As the high-accuracy gas/moisture adsorption amount measuring device, BELSORP-max II (product name) manufactured by MicrotracBEL Corp. is used.

In the case where the degree of hydrophilization is not more than 30%, weight loss due to the fluorine plasma can be suppressed when the fine particles are exposed to fluorine plasma among plasmas; thus the fine particles have fluorine plasma resistance.

On the other hand, in the case where the degree of hydrophilization is more than 30%, weight loss due to the fluorine plasma increases when the fine particles are exposed to fluorine plasma; thus fluorine plasma resistance cannot be obtained. The fluorine plasma is, for example, CF₄ plasma.

In the case where the degree of hydrophilization of the fine particles is not more than 30%, disappearance of a rubber component due to reaction of the rubber component with plasma is suppressed when, for example, the fine particles are mixed with rubber and the rubber is irradiated with fluorine plasma. In the case where the degree of hydrophilization of the fine particles is more than 30%, when rubber mixed with the fine particles is irradiated with fluorine plasma, the weight loss amount of the fine particles increases, and cases that a rubber component frequently reacts with plasma and disappears increase.

When the weight loss ratio is not more than 9 mass% and the degree of hydrophilization is not more than 30%, the fine particles have oxygen plasma resistance and fluorine plasma resistance.

From the viewpoint that the fine particles have both oxygen plasma resistance and fluorine plasma resistance, it is preferable that the weight loss ratio is 0 to 9 mass% and that the degree of hydrophilization is 0 to 30%. It is more preferable that the weight loss ratio is 0 to 6 mass% and that the degree of hydrophilization is 0 to 20%, and it is further preferable that the weight loss ratio is 0 to 4 mass% and that the degree of hydrophilization is 0 to 8%.

### [Method for Producing fine particles]

A method for producing fine particles includes a step of supplying Si powder as a feedstock into a thermal plasma flame and a step of supplying cooling gas to the thermal plasma flame to thereby produce the fine particles. The cooling gas includes methane gas (CH₄ gas).

The step of supplying the feedstock into the thermal plasma flame is to supply the feedstock into the thermal plasma flame with the feedstock being dispersed in a particulate form, for example.

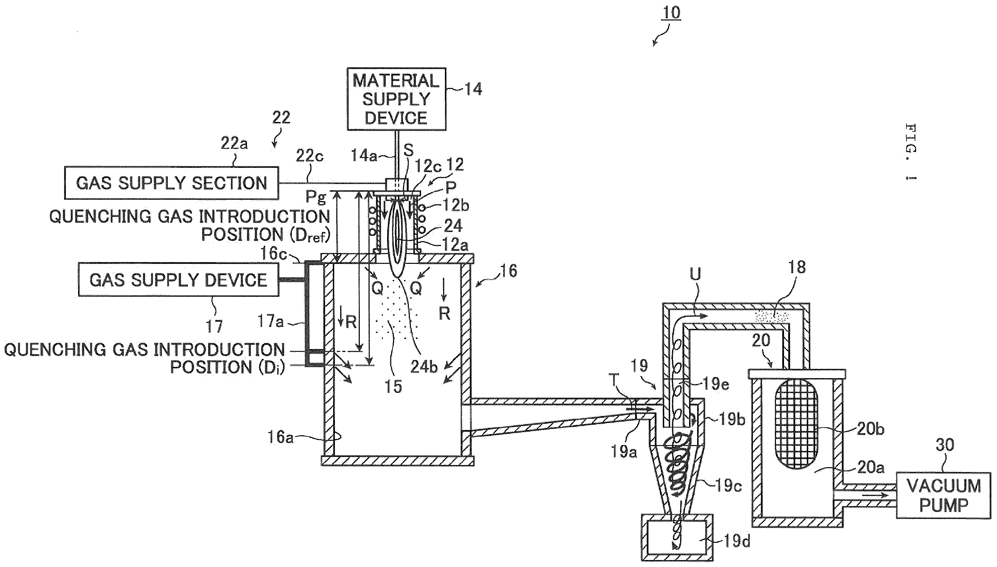

Hereinafter, the method for producing fine particles according to the invention is described with reference to FIG. 1, but the method is not limited to a production method using a production apparatus shown in FIG. 1.

FIG. 1 is a schematic view showing an example of a fine particle production apparatus that is used in the method for producing fine particles according to the invention. A fine particle production apparatus 10 (hereinafter referred to simply as "production apparatus 10") shown in FIG. 1 is used to produce the above-described fine particles. The above-described fine particles can be obtained by the production apparatus 10.

### [One Example of Fine Particle Production Apparatus]

The production apparatus 10 includes a plasma torch 12 generating thermal plasma, a material supply device 14 supplying feedstock powder of fine particles into the plasma torch 12, a chamber 16 serving as a cooling tank for use in producing primary fine particles 15, a gas supply device 17, a cyclone 19 removing, from the produced primary fine particles 15, coarse particles having a particle size equal to or larger than an arbitrarily specified particle size, and a collecting section 20 collecting secondary fine particles 18 having a desired particle size as obtained by classification by the cyclone 19. The primary fine particles 15 are fine particle bodies in the middle of the production process of the fine particles of the invention, and the secondary fine particles 18 are equivalent to the fine particles of the invention. The primary fine particles 15 and the secondary fine particles 18 include, for example, SiC and Si.

Various devices in, for example, JP 2007-138287 A may be used for the material supply device 14, the chamber 16, the cyclone 19, and the collecting section 20.

In this embodiment, Si powder is used as the feedstock in the production of the fine particles. The average particle size of the Si powder is appropriately designed to allow easy evaporation of the powder in a thermal plasma flame. The average particle size of Si powder is measured by a laser diffraction method and is, for example, not larger than 100 um, preferably not larger than 10 um, and more preferably not larger than 5 um.

The plasma torch 12 is constituted of a quartz tube 12a and a coil 12b for high frequency oscillation surrounding the outside of the quartz tube. A supply tube 14a to be described later which is for supplying feedstock powder of the fine particles into the plasma torch 12 is provided on the top of the plasma torch 12 at the central part thereof. A plasma gas supply port 12c is formed in the peripheral portion of the supply tube 14a (on the same circumference). The plasma gas supply port 12c is in a ring shape. To the coil 12b for high frequency oscillation, a power source (not shown) that generates a high frequency voltage is connected. When a high frequency voltage is applied to the coil 12b for high frequency oscillation, a thermal plasma flame 24 is generated. The feedstock (not shown) is evaporated by the thermal plasma flame 24 and transformed into a gas phase state. The plasma torch 12 constitutes a treatment section transforming the feedstock into a gas phase state by means of a gas-phase process of the invention.

A plasma gas supply source 22 is configured to supply plasma gas into the plasma torch 12 and for instance has a gas supply section 22a. The gas supply section 22a is connected to the plasma gas supply port 12c through piping 22c. Although not shown, the gas supply section 22a is provided with a supply amount adjuster such as a valve for adjusting the supply amount. Plasma gas is supplied from the plasma gas supply source 22 into the plasma torch 12 through the plasma gas supply port 12c of ring shape in the direction indicated by arrow P and the direction indicated by arrow S.

For example, argon gas is used as the plasma gas. In this case, the gas supply section 22a stores argon gas. Argon gas is supplied from the gas supply section 22a of the plasma gas supply source 22 into the plasma torch 12 in the direction indicated by arrow P and the direction indicated by arrow S after passing through the piping 22c and then the plasma gas supply port 12c. The plasma gas is not limited to argon gas and may be mixed gas made by adding hydrogen gas to argon gas. In this case, a gas supply section (not shown) configured to store the hydrogen gas is provided. A ratio between the argon gas and the hydrogen gas in the mixed gas is suitably determined by composition of the fine particles to be produced or other factors.

When a high frequency voltage is applied to the coil 12b for high frequency oscillation, the thermal plasma flame 24 is generated in the plasma torch 12. The feedstock (not shown) is evaporated by the thermal plasma flame 24 and transformed into a gas phase state.

It is necessary for the thermal plasma flame 24 to have a higher temperature than the boiling point of the feedstock powder. A higher temperature of the thermal plasma flame 24 is more preferred because the feedstock powder is more easily transformed into a gas phase state; however, there is no particular limitation on the temperature. For instance, the thermal plasma flame 24 may have a temperature of 6,000°C, and in theory, the temperature is deemed to reach around 10,000°C.

The ambient pressure inside the plasma torch 12 is preferably up to atmospheric pressure. For the atmosphere at a pressure up to atmospheric pressure, the pressure is not particularly limited and is, for example, in the range of 0.5 to 100 kPa.

The outside of the quartz tube 12a is surrounded by a concentrically formed tube (not shown), and cooling water is circulated between this tube and the quartz tube 12a to cool the quartz tube 12a with the water, thereby preventing the quartz tube 12a from having an excessively high temperature due to the thermal plasma flame 24 generated in the plasma torch 12.

The material supply device 14 is connected to the top of the plasma torch 12 through the supply tube 14a. The material supply device 14 is configured to supply the feedstock powder in a powdery form into the thermal plasma flame 24 in the plasma torch 12, for example.

For example, as described above, the device disclosed in JP 2007-138287 A may be used as the material supply device 14 that supplies Si powder as the feedstock in a powdery form. In this case, the material supply device 14 includes, for example, a storage tank (not shown) storing the feedstock, a screw feeder (not shown) transporting the feedstock in a fixed amount, a dispersion section (not shown) dispersing the feedstock transported by the screw feeder to transform it into the form of primary particles before the feedstock is finally sprayed, and a carrier gas supply source (not shown).

Together with carrier gas to which push-out pressure is applied from the carrier gas supply source, the feedstock is supplied into the thermal plasma flame 24 in the plasma torch 12 through the supply tube 14a.

The configuration of the material supply device 14 is not particularly limited as long as the device can prevent the feedstock from agglomerating, thus making it possible to spray the feedstock in the plasma torch 12 with the dispersed state maintained. Inert gas such as argon gas is used as the carrier gas, for example. The flow rate of the carrier gas can be controlled using, for instance, a flowmeter such as a float type flowmeter. The flow rate value of the carrier gas is indicated by a reading on the flowmeter.

The chamber 16 is provided below and adjacent to the plasma torch 12, and a gas supply device 17 is connected to the chamber 16. For example, the primary fine particles 15 including SiC and Si are produced in the chamber 16. The chamber 16 also serves as a cooling tank.

The gas supply device 17 is configured to supply cooling gas into the chamber 16. The gas supply device 17 supplies a cooling gas (quenching gas) containing an inert gas to the feedstock that has been evaporated by the thermal plasma flame 24 and transformed into a gas phase state.

The gas supply device 17 includes a gas supply source (not shown), piping 17a, and a pressure control valve (not shown) configured to control an amount of supplied gas. The gas supply device 17 further includes a pressure application device (not shown) such as a compressor or a blower which applies push-out pressure to the cooling gas to be supplied into the chamber 16.

Argon gas and methane gas are stored separately in the gas supply source. In this case, the cooling gas is gas made by mixing argon gas and methane gas. A ratio between the argon gas and the methane gas in the cooling gas is suitably determined by composition of the fine particles to be produced or other factors.

The gas supply device 17 supplies quenching gas (cooling gas) from, for example, the lateral direction, i.e., horizontally, to the thermal plasma flame 24, for example. The quenching gas (cooling gas) is supplied to, for example, a tail portion 24b of the thermal plasma flame 24.

The cooling gas supplied from the gas supply device 17 into the chamber 16 rapidly cools the Si powder having been evaporated and transformed to a gas phase state through the thermal plasma flame 24, thereby obtaining the primary fine particles 15 including SiC and Si. Besides, the cooling gas has additional functions such as contribution to classification of the primary fine particles 15 in the cyclone 19.

The gas supply device 17 may supply the mixed gas of argon gas and methane gas as the cooling gas at, for example, 45 degrees in the direction of arrow Q toward the tail portion 24b of the thermal plasma flame 24, i.e., the end of the thermal plasma flame 24 on the opposite side from the plasma gas supply port 12c, that is, a terminating portion of the thermal plasma flame 24, and also supply the cooling gas from above to below along an inner wall 16a of the chamber 16, that is, in the direction of arrow R shown in FIG. 1.

When the primary fine particles 15 including SiC and Si and having just been produced collide with each other to form agglomerates, this causes nonuniform particle size, resulting in lower quality. However, dilution of the primary fine particles 15 with the mixed gas supplied as the cooling gas in the direction of arrow Q toward the tail portion 24b (terminating portion) of the thermal plasma flame prevents the fine particles from colliding with each other to agglomerate together.

The quenching gas (cooling gas) supplied from above to below along the inner wall of the chamber 16, i.e., the mixed gas supplied as the cooling gas in the direction of the arrow R prevents the primary fine particles 15 from adhering to the inner wall 16a of the chamber 16 in the process of collecting the primary fine particles 15, whereby the yield of the produced primary fine particles 15 is improved.

While the mixed gas of argon gas and methane gas is used as the cooling gas (quenching gas), this is not the sole case. Argon gas is an example of inert gas, while methane gas (CH₄) is an example of hydrocarbon gas having 4 or less carbon atoms.

For the cooling gas (quenching gas), not only argon gas but also nitrogen gas or the like can be used. In addition, not only methane gas but also any hydrocarbon gas having 4 or less carbon atoms can be used. Hence, for the cooling gas (quenching gas), paraffinic hydrocarbon gases such as ethane (C₂H₆), propane (C₃H₈), and butane (C₄H_{1C}), and olefinic hydrocarbon gases such as ethylene (C₂H₄), propylene (C₃H₆), and butylene (C₄H₈) can be used.

As shown in FIG. 1, the cyclone 19 is provided to the chamber 16 to classify the primary fine particles 15 based on a desired particle size. The cyclone 19 includes an inlet tube 19a which supplies the primary fine particles 15 from the chamber 16, a cylindrical outer tube 19b connected to the inlet tube 19a and positioned at an upper portion of the cyclone 19, a truncated conical part 19c continuing downward from the bottom of the outer tube 19b and having a gradually decreasing diameter, a coarse particle collecting chamber 19d connected to the bottom of the truncated conical part 19c for collecting coarse particles having a particle size equal to or larger than the above-mentioned desired particle size, and an inner tube 19e connected to the collecting section 20 to be detailed later and projecting from the outer tube 19b.

A gas stream containing the primary fine particles 15 is blown from the inlet tube 19a of the cyclone 19 to flow along the inner peripheral wall of the outer tube 19b, and accordingly, this gas stream flows in the direction from the inner peripheral wall of the outer tube 19b toward the truncated conical part 19c as indicated by arrow T in FIG. 1, thus forming a downward swirling stream.

When the downward swirling stream is inverted to an upward stream, coarse particles cannot follow the upward stream due to the balance between the centrifugal force and drag, fall down along the lateral surface of the truncated conical part 19c and are collected in the coarse particle collecting chamber 19d. Fine particles having been affected by the drag more than the centrifugal force are discharged to the outside of the cyclone 19 through the inner tube 19e along with the upward stream on the inner wall of the truncated conical part 19c.

The apparatus is configured such that a negative pressure (suction force) is exerted from the collecting section 20 to be detailed later through the inner tube 19e. Due to the negative pressure (suction force), the fine particles separated from the swirling gas stream are sucked as indicated by arrow U and sent to the collecting section 20 through the inner tube 19e.

On the extension of the inner tube 19e which is an outlet for the gas stream in the cyclone 19, the collecting section 20 for collecting the secondary fine particles (fine particles) 18 having a desired particle size on the order of nanometers is provided. The collecting section 20 includes a collecting chamber 20a, a filter 20b provided in the collecting chamber 20a, and a vacuum pump 30 connected through a pipe provided at a lower portion of the collecting chamber 20a. The fine particles delivered from the cyclone 19 are sucked by the vacuum pump 30 to be introduced into the collecting chamber 20a, and remain on the surface of the filter 20b and are then collected.

It should be noted that the number of cyclones used in the production apparatus 10 is not limited to one and may be two or more.

Next, an example of the fine particle production method using the production apparatus 10 above is described below.

First, for example, Si powder having an average particle size of not more than 5 um is charged into the material supply device 14 as the feedstock powder of the fine particles.

Argon gas is used as the plasma gas, for example, and a high frequency voltage is applied to the coil 12b for high frequency oscillation to generate the thermal plasma flame 24 in the plasma torch 12.

The cooling gas is supplied from the gas supply device 17 in, for example, the lateral direction to the tail portion 24b of the thermal plasma flame 24. The cooling gas is, for instance, mixed gas of argon gas and methane gas.

Next, the Si powder is transported with gas, for example, argon gas used as the carrier gas and supplied to the thermal plasma flame 24 in the plasma torch 12 through the supply tube 14a. The supplied Si powder is evaporated in the thermal plasma flame 24 and transformed into a gas phase state. The Si powder in a gas phase state is quenched by the above-mentioned cooling gas to thereby produce the primary fine particles 15 (fine particles) including SiC and Si.

In the method for producing fine particles, the particle size of the fine particles can be changed by a flow rate of the cooling gas.

The weight loss ratio and the degree of hydrophilization of the fine particles can be changed by a methane gas concentration or introduction position. The standard position Pg of the methane gas introduction position is the plasma gas supply port 12C.

The range from the above-mentioned standard position Pg to the upper end surface 16c of the chamber 16 is defined as a range D_{ref}. With respect to the above-mentioned range D_{ref}, the range D_{ref} × 2.25 to 2.44 is defined as a range Di. The quenching gas such as methane gas is introduced within the range Di. That is, the range Di is the quenching gas introduction position.

The piping 17a of the gas supply device 17 is connected to, for example, the upper end surface 16c of the chamber 16 and the quenching gas introduction position (range Di). Although not illustrated, the piping 17a is provided with a switching portion such as a valve, and the switching portion can change the quenching gas introduction position.

Then, the primary fine particles 15, including SiC and Si, thus obtained in the chamber 16 are blown in through the inlet tube 19a of the cyclone 19 together with a gas stream along the inner peripheral wall of the outer tube 19b, and accordingly, this gas stream flows along the inner peripheral wall of the outer tube 19b as indicated by arrow T in FIG. 1, thus forming a swirling stream which goes downward. When the downward swirling stream is inverted to an upward stream, coarse particles cannot follow the upward stream due to the balance between the centrifugal force and drag, fall down along the lateral surface of the truncated conical part 19c and are collected in the coarse particle collecting chamber 19d. Fine particles having been affected by the drag more than the centrifugal force are discharged along the inner wall of the truncated conical part 19c to the outside of the cyclone 19 together with the upward stream on the inner wall.

Due to the negative pressure (suction force) applied by the vacuum pump 30 through the collecting section 20, the discharged secondary fine particles (fine particles) 18 are sucked in the direction indicated by arrow U in FIG. 1 and sent to the collecting section 20 through the inner tube 19e to be collected on the filter 20b of the collecting section 20. The internal pressure of the cyclone 19 at this time is preferably equal to or lower than the atmospheric pressure. For the particle size of the secondary fine particles (fine particles) 18, an arbitrary particle size on the order of nanometers is specified according to the intended purpose. The fine particles having excellent plasma resistance are obtained in this manner.

In the invention, while the primary fine particles including SiC and Si are formed using a thermal plasma flame, the primary fine particles including SiC and Si may be formed by another gas-phase process. Thus, the method for forming the fine particles including SiC and Si is not limited to one using a thermal plasma flame as long as it is a gas-phase process, and may alternatively be one using a flame process, for example. Here, the method for forming the primary fine particles using a thermal plasma flame is called thermal plasma process.

The present invention is basically configured as above. While the fine particles and the method for producing fine particles according to the invention are described above in detail, the invention is by no means limited to the foregoing embodiments, and it should be understood that various improvements and modifications are possible without departing from the scope and spirit of the invention.

### EXAMPLES

The fine particles of the invention are more specifically described below.

In the present examples, the fine particles including SiC and Si of Examples 1 to 6 are produced. The production apparatus 10 shown in FIG. 1 was used in production of fine particles. Shown below are the production conditions.

As the production conditions, the input power to plasma was 86 kW as a constant, Ar gas and H₂ gas were used as the plasma gas, the flow rate of Ar gas was 210 L/minute (as being converted to standard conditions), and the flow rate of H₂ gas was 20 L/minute (as being converted to standard conditions). The pressure inside the plasma torch was fixed to 40 kPa.

In supplying the feedstock, Ar gas was used as the carrier gas, and Si powder having an average particle size of 5 um was supplied at a rate of 3.8 g/minute together with the carrier gas. The flow rate of the carrier gas was 15 L/minute (as being converted to standard conditions). The average particle size of the Si powder is a value measured with a particle size distribution meter.

Mixed gas of argon gas (Ar gas) and methane gas (CH₄ gas) was used as the quenching gas. As the quenching gas, the flow rate of the argon gas (Ar gas) was 150 L/minute (as being converted to standard conditions), and the flow rate of the methane gas (CH₄ gas) was 0.5, 1, 2.5, or 5 L/minute (as being converted to standard conditions) such that the gas concentration became a predetermined concentration.

In Examples 1 to 6, the weight loss ratio and the degree of hydrophilization were adjusted by the methane gas (CH₄ gas) concentration and introduction position. The methane gas (CH₄ gas) introduction position was within the range D_{ref} and the range D_{ref} × 2.25 to 2.44 based on the above-mentioned standard position Pg (see FIG. 1). The spaces of the methane gas introduction position in Table 1 below represent the methane gas introduction positions of Examples 1 to 6.

The weight loss ratio and the degree of hydrophilization in each of Examples 1 to 6 are shown Table 1 below.

The particle size, the weight loss due to oxygen plasma, and the weight loss due to fluorine plasma were measured for Examples 1 to 6. The measurement results are shown in Table 1 below.

As the particle size, the average particle size was determined using the BET method.

The plasma resistance of the particles was determined by preparing a tablet having a diameter of 7 mm and a thickness of 0.5 to 0.6 mm using a tablet forming device, performing oxygen plasma and CF₄ plasma irradiation treatment, and examining the change in weight before and after the irradiation. The oxygen plasma irradiation conditions are as follows: gas flow rate: 16 sccm (16 × 1.667 × 10⁻⁸ m³/s); RF output: 400 W; pressure: 2.66 Pa; and etching time: 75 minutes. The CF₄ plasma irradiation conditions are as follows: flow rate: 16 sccm; RF output: 400 W; pressure: 2.66 Pa; and etching time: 75 minutes. A high density plasma ICP etching apparatus, MODEL RIE-101iPH manufactured by Samco Inc. was used as the plasma irradiation device.

**[Table 1}**

| | Methane gas introduction position | Methane gas concentration (vol %) | BET (m²/g) | Particle size d_{BET} (nm) | Weight loss ratio (mass%) | Degree of Hydrophilization (%) | Weight loss due to O₂ plasma (g/m²•min) | Weight loss due to CH₄ plasma (g/m²•min) |
|---|---|---|---|---|---|---|---|---|
| Example 1 | Dref × 2.25 to 2.44 | 1.30 | 48.94 | 38.19 | 7.87 | 13.17 | 0.069 | 0.243 |
| Example 2 | Dref × 2.25 to 2.44 | 0.65 | 34.1 | 54.81 | 3.86 | 15.07 | 0.035 | 0.312 |
| Example 3 | Dref × 2.25 to 2.44 | 0.26 | 18.41 | 101.53 | 0 | 30 | 0.035 | 0.381 |
| Example 4 | Dref × 2.25 to 2.44 | 0.13 | 18.02 | 103.73 | 0 | 34.39 | 0.035 | 0.555 |
| Example 5 | Dref | 1.30 | 23.99 | 77.91 | 9.23 | 8.45 | 0.104 | 0.277 |
| Example 6 | Dref | 0.65 | 19.53 | 95.71 | 0.67 | 20.09 | 0.069 | 0.416 |

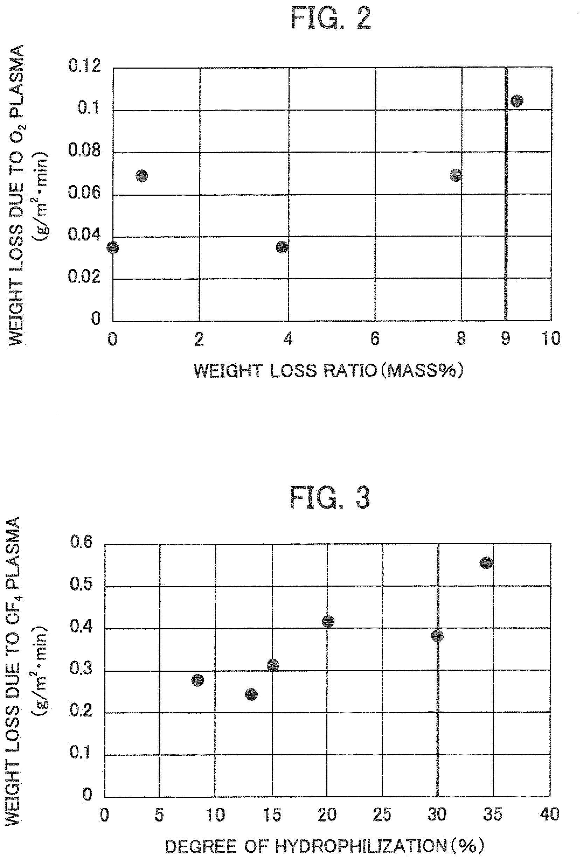

A relation between the weight loss ratio and the weight loss due to oxygen plasma is shown in FIG. 2. A relation between the degree of hydrophilization and the weight loss due to fluorine plasma is shown in FIG. 3.

Here, FIG. 2 is a graph showing the oxygen plasma resistance of the fine particles of the invention, while FIG. 3 is a graph showing the fluorine plasma resistance of the fine particles of the invention.

Of Examples 1 to 6 above, Examples 1 and 2 correspond to inventive examples, while Examples 3 to 6 correspond to comparative examples.

As shown in Table 1 and FIG. 2, when the weight loss ratio is not more than 9 mass%, in the case where the fine particles are exposed to oxygen plasma, weight loss due to the oxygen plasma can be suppressed; thus the fine particles have oxygen plasma resistance.

In addition, as shown in Table 1 and FIG. 3, when the degree of hydrophilization is not more than 30%, in the case where the fine particles are exposed to fluorine plasma, weight loss due to the fluorine plasma can be suppressed; thus the fine particles have oxygen plasma resistance.

### REFERENCE SIGNS LIST

10 fine particle production apparatus (production apparatus)
12 plasma torch
12a quartz tube
12b coil for high frequency oscillation
12c plasma gas supply port
14 material supply device
14a supply tube
15 primary fine particle
16 chamber
16a inner wall
16c upper end surface
17 gas supply device
17a piping
18 secondary fine particle
19 cyclone
19a inlet tube
19b outer tube
19c truncated conical part
19d coarse particle collecting chamber
19e inner tube
20 collecting section
20a collecting chamber
20b filter
22 plasma gas supply source
22a gas supply section
22c piping
24 thermal plasma flame
24b tail portion
30 vacuum pump

## Claims

1. Fine particles comprising SiC and Si,
wherein the fine particles have a particle size of not more than 80 nm,
a weight loss ratio of not more than 9 mass%, and
a degree of hydrophilization of not more than 30%.

2. A method for producing fine particles, comprising:
a step of supplying a feedstock into a thermal plasma flame, the feedstock being Si powder; and
a step of supplying cooling gas to the thermal plasma flame to thereby produce the fine particles,
wherein the cooling gas includes methane gas.

3. The method for producing fine particles according to claim 2, wherein the step of supplying the feedstock into the thermal plasma flame includes supplying the feedstock into the thermal plasma flame with the feedstock being dispersed in a particulate form.
